# EUROPÄISCHE PATENTSCHRIFT

(11) **EP 3 077 695 B1**
(45) Veröffentlichungstag und Bekanntmachung des Hinweises auf die Patenterteilung: **22.05.2019**
(21) Anmeldenummer: 14808921.2
(22) Anmeldetag: 02.12.2014
(51) Int. Cl.: F16D 65/097, F16D 65/00

(54) **BREMSBELAG MIT EINER DÄMPFUNGSEINRICHTUNG FÜR EINE SCHEIBENBREMSE, EINE SCHEIBENBREMSE MIT EINEM SOLCHEN BREMSBELAG UND VERFAHREN ZUM OPTIMIEREN EINER DÄMPFUNGSEINRICHTUNG EINES SOLCHEN BREMSBELAGS**
BRAKE LINING COMPRISING A DAMPING DEVICE FOR A DISK BRAKE, DISK BRAKE COMPRISING SUCH A BRAKE LINING, AND METHOD FOR OPTIMIZING A DAMPING DEVICE OF SUCH A BRAKE LINING
GARNITURE DE FREIN MUNIE D'UN DISPOSITIF D'AMORTISSEMENT ET DESTINÉE À UN FREIN À DISQUE, FREIN À DISQUE MUNI DE LADITE GARNITURE DE FREIN, ET PROCÉDÉ PERMETTANT D'OPTIMISER UN DISPOSITIF D'AMORTISSEMENT DE LADITE GARNITURE DE FREIN

(30) Priorität: 05.12.2013 DE 102013113546
(43) Veröffentlichungstag der Anmeldung: 12.10.2016
(73) Patentinhaber: KNORR-BREMSE Systeme für Nutzfahrzeuge GmbH, 80809 München (DE)
(72) Erfinder: HEUSSAFF, Arnaud, 80336 München (DE); DRESEN, Dirk, 51375 Leverkusen (DE)
(86) Internationale Anmeldenummer: PCT/EP2014/076163
(87) Internationale Veröffentlichungsnummer: WO 2015/082429

(56) Entgegenhaltungen:
- EP-A1- 1 455 109
- WO-A1-99/54636
- DE-A1-102007 061 134
- DE-A1-102010 027 846
- JP-A- S6 182 028
- US-A1- 2009 032 343

## Beschreibung

Die Erfindung betrifft einen Bremsbelag mit Dämpfungseinrichtung für eine Scheibenbremse, insbesondere für ein Nutzfahrzeug, mit einer Belagträgerplatte, die einen Reibbelag trägt, sowie mindestens eine mit der Belagträgerplatte verbundene Dämpfungseinrichtung. Die Erfindung bezieht sich auch auf eine Scheibenbremse mit einem solchen Bremsbelag und ein Verfahren zum Optimieren einer Dämpfungseinrichtung eines solchen Bremsbelags.

In Funktion der Scheibenbremse, also bei einer Bremsung, wenn der Bremsbelag gegen eine Bremsscheibe gepresst wird, entstehen Schwingungen, die auf beteiligte Bauteile, wie einen Bremssattel oder Bremsstempel und Bremszylinder übertragen werden.

Zum Einen erzeugen diese Schwingungen an den genannten Bauteilen mechanische Belastungen, die deren Standzeit beeinträchtigen, zum Anderen entstehen Quietschgeräusche, die weder für den Fahrzeugführer noch für die Umgebung akzeptabel sind.

Um hier Abhilfe zu schaffen, ist es aus dem Stand der Technik bekannt, an der dem Reibbelag abgewandten Rückseite der Belagträgerplatte ein Dämpfungselement anzubringen.

Hierzu ist es bekannt, das Dämpfungselement mit der Belagträgerplatte zu verkleben. Allerdings ergeben sich Probleme hinsichtlich der Dauerhaftigkeit dieser Verklebung, vor allem aufgrund der beim Bremsen entstehenden Reibungswärme, die die Klebverbindung in Mitleidenschaft ziehen kann.

In der DE 10 2004 051 269 A1 wird deshalb vorgeschlagen, das Dämpfungselement formschlüssig mit der Belagträgerplatte und gegebenenfalls mit dem Reibbelag zu verbinden.

Hieraus ergeben sich jedoch einige durchaus beklagenswerte Nachteile, sowohl hinsichtlich der Fertigung des Bremsbelages wie auch hinsichtlich seiner Funktionalität.

Die Bereitstellung von miteinander korrespondierenden Formschlussmitteln, einerseits an dem Dämpfungselement und andererseits an der Belagträgerplatte, ist nur mit einem entsprechenden Fertigungsaufwand zu realisieren, der naturgemäß einer stets gewünschten Kostenoptimierung entgegensteht.

Darüber kann auch die Dämpfungseigenschaft im Wesentlichen nicht an die bauartbedingten Erfordernisse der Scheibenbremse angepasst werden, da vorrangig eine ausreichend stabile Verbindung des Dämpfungselements mit der Belagträgerplatte gewährleistet sein muss.

Dies betrifft gleichermaßen Konstruktionen, bei denen eine Dämpfungsschicht in Sandwich-Bauweise zwischen zwei Lagen angeordnet ist, wie sie beispielsweise in der DE 28 21 194 C2 thematisiert ist.

WO-A-99/54636 beschreibt eine Bremsbelaganordnung zum Einbau in ein Scheibenbremssystem, umfassend eine metallische Rückenplatte mit einem Paar von Hauptseiten; einen Reibbelag, der an einer der Hauptseiten der Rückenplatte angeheftet ist; und eine laminierte Schwingungsdämpferunterbaugruppe, die eine metallische Zwischenlage und eine Elastomerlage aufweist und an der anderen der Hauptseiten der Rückenplatte durch Widerstandsschweißungen zur Verbesserung der Betriebszuverlässigkeit der Anordnung angebracht ist.

DE-A-10 2010 027846 betrifft ein Verfahren zum Vermindern bzw. Vermeiden von Resonanzgeräuschen einer Reibeinheit, die eine Trägerplatte mit einem daran gehaltenen Reibbelag aufweist, bei dem das Eigenschwingungsverhalten der jeweiligen produzierten Reibeinheiten ermittelt wird und bei Auftreten von Resonanzgeräuschen eine mechanische Nachbearbeitung des Reibbelags erfolgt. Dabei wird für die Nachbearbeitung auf zuvor ermittelte Werte zurückgegriffen, die für den bestimmten Reibeinheit-Typ Kennfrequenz-Referenzwerte enthält. Die ermittelten Kennfrequenzen werden anhand einer Reibeinheit dieses Typs ermittelt, indem dieser Reibeinheit-Typ mit Schwingungen definierter Frequenz beaufschlagt wird und die sich daraus ergebenden Eigenschwingungen der Reibeinheit sowie sich ergebende Eigenschwingungen unter Eingriff in die Geometrie deren Reibbelags gemessen werden. Bei einer Abweichung der sich ergebenden Eigenschwingungen von einem vordefinierten, geräuscharmen Schwingungsbereich wird die Geometrie des produzierten Reibbelags anhand der Tabellenwerte geändert, um das Eigenschwingungsverhalten so zu andern, dass nach der Bearbeitung der Bereich der Eigenschwingungen in den definierten Schwingungsbereich, frei von Resonanzgeräuschen, fällt.

Der Erfindung liegt die Aufgabe zugrunde, einen Bremsbelag der gattungsgemäßen Art so weiterzuentwickeln, dass er kostengünstiger herstellbar ist und seine Funktionsfähigkeit verbessert wird.

Eine weitere Aufgabe besteht darin, eine verbesserte Scheibenbremse anzugeben.

Eine noch weitere Aufgabe ist es, ein Verfahren zum Optimieren einer Dämpfungseinrichtung eines Bremsbelags zu schaffen.

Diese Aufgabe wird durch einen Bremsbelag mit den Merkmalen des Anspruchs 1 gelöst.

Die weitere Aufgabe wird durch eine Scheibenbremse mit den Merkmalen des Anspruchs 12 gelöst.

Die noch weitere Aufgabe wird durch ein Verfahren mit den Merkmalen des Anspruchs 13 gelöst.

Durch die Erfindung ergeben sich nun eine ganze Reihe von Vorteilen gegenüber dem Stand der Technik, die so nicht zu erwarten waren.

Demgemäß weist ein erfindungsgemäßer Bremsbelag mit einer Dämpfungseinrichtung für eine Scheibenbremse für ein Kraftfahrzeug, insbesondere für ein Nutzfahrzeug, eine Belagträgerplatte, die einen Reibbelag trägt, auf, wobei die Dämpfungseinrichtung mindestens ein mit der Belagträgerplatte verbundenes Dämpfungselement aufweist. Die Dämpfungseinrichtung umfasst ein Verbindungsprofil, welches das mindestens eine Dämpfungselement durch thermischen Stoffschluss mit der Belagträgerplatte verbindet.

Eine erfindungsgemäße Scheibenbremse für ein Kraftfahrzeug, insbesondere für ein Nutzfahrzeug, mit einem eine Bremsscheibe übergreifenden Bremssattel, einer Zuspannvorrichtung, mindestens einer Spindeleinheit mit einem Gewinderohr, wobei beidseitig der Bremsscheibe jeweils mindestens ein Bremsbelag mit einer Belagträgerplatte angeordnet ist, weist mindestens einen oben beschriebenen erfindungsgemäßen Bremsbelag auf.

Ein erfindungsgemäßes Verfahren zum Optimieren einer Dämpfungseinrichtung des oben angegebenen erfindungsgemäßen Bremsbelags umfasst die Verfahrensschritte
(S1) Bereitstellen eines Bremsbelags mit einer Bremsträgerplatte mit ermittelten Eigenfrequenzen und Materialparametern; (S2) Auswählen eines Verbindungsprofils der Dämpfungseinrichtung aus einer Gruppe von Verbindungsnähten, Verbindungspunkten, Mustern und Knoten und Ermitteln von sich neu ergebenden Eigenfrequenzen und modalen Dämpfungen mittels einer Modalanalyse des Bremsbelags; und (S3) Optimieren der Dämpfungseinrichtung des Bremsbelags mittels eines Finite-Elemente- (FE-) Modells.

Zunächst sei darauf hingewiesen, dass die Befestigung des Dämpfungselements an der Belagträgerplatte erfindungsgemäß durch thermischen Stoffschluss, insbesondere durch Schweißen, unter Ausbildung einer Verbindungsnaht als Schweißnaht, wesentlich einfacher zu bewerkstelligen ist als die zum Stand der Technik beschriebene Art der Befestigung.

Daraus ergeben sich konsequenterweise erhebliche Kosteneinsparungen, die vor allem auch deshalb von besonderer Bedeutung sind, als Bremsbeläge als Serienteile in großen Stückzahlen hergestellt werden und Verwendung finden, vor allem, da es sich dabei um Ersatzteile handelt.

Prinzipiell kann das Dämpfungselement endseitig in Richtung der Belagträgerplatte, und diese im Randbereich überdeckend, umgebogen sein, so dass in Umfangsrichtung der Bremsscheibe, also in einer Belastungsrichtung beim Bremsen ein zusätzlicher Formschluss erreicht wird, der es ermöglicht, die mindestens eine Schweißnaht, vorzugsweise jedoch mehrere, im Wesentlichen nach Dämpfungskriterien zu platzieren.

Dabei kann durch die Ausführung der Schweißnaht die Eigenfrequenz des Bremsbelages und die sich daraus ergebende Dämpfung positiv beeinflusst werden, d.h. im Sinne einer Minimierung, je nach Dimensionierung und Platzierung.

Beispielsweise kann das sich verändernde Schwingungsverhalten aufgrund der betriebsbedingten Abnahme der Reibbelagdicke berücksichtigt werden, wobei partiell Schweißnähte bzw. Schweißpunkte vorgesehen sind, die an den dafür vorbestimmten Stellen angebracht werden.

Im Übrigen kann durch den thermischen Stoffschluss des Dämpfungselements mit der Belagträgerplatte ein fester Verbund hergestellt werden, während dies bei der zum Stand der Technik beschriebenen formschlüssigen Verbindung nicht möglich ist. Insoweit bildet das Dämpfungselement keinen Resonanzboden, sondern wirkt ihm entgegen.

Gemäß der Erfindung umfasst das Verbindungsprofil mindestens eine Verbindungsnaht. Eine Position dieser Verbindungsnaht kann in einer x-Richtung tangential zu einer Bremsscheibe der zuzuordnenden Scheibenbremse liegen, wobei die x-Richtung in Fahrtrichtung (auch Rückwärtsfahrtrichtung) eines mit der zuzuordnenden Scheibenbremse ausgerüsteten Fahrzeugs verläuft. Natürlich kann diese Verbindungsnaht auch schräg, d.h. in einem Winkel ungleich 0° oder 180° zu der x-Richtung verlaufen. Die Verbindungsnaht kann eine Gerade sein oder/und auch in Kurven verlaufen. Auch Spiralformen sind denkbar.

Weiterhin kann das Verbindungsprofil mindestens einen Verbindungspunkt umfassen. Dieser Verbindungspunkt kann z.B. in einfacher Weise durch Punktschweißen hergestellt werden.

Außerdem kann das Verbindungsprofil Muster mit oder ohne Knoten aufweisen. Diese Muster können aus den Verbindungsnähten bestehen.

In einer anderen Ausführung weist das Verbindungsprofil mindestens ein Muster in Art chladnischer Klangfiguren auf. Dies hat den Vorteil, dass sich die chladnischen Klangfiguren gemäß bestimmter Frequenzen des Bremsbelags und/oder der Belagträgerplatte ausbilden und so entsprechend eine Positions- und Formauswahl des Verbindungsprofils leichter gestaltet.

In einer noch anderen Ausführung ist vorgesehen, dass das Verbindungsprofil sowohl Verbindungen als auch auf die Belagträgerplatte oder/und auf das mindestens eine Dämpfungselement aufgetragene Anordnungen umfasst. Damit ist eine noch exaktere Beeinflussung von Eigenfrequenzen möglich.

Außerdem kann das Verbindungsprofil unsymmetrische oder/und symmetrische Anordnungen umfassen, wodurch eine weitere Vergrößerung der Vielfalt von Beeinflussungsmöglichkeiten ergibt.

Die gemäß der Erfindung vorgesehen Verbindung des Dämpfungselementes mit der Belagträgerplatte durch thermischen Stoffschluss umfasst nicht nur das erwähnte Schweißen, sondern auch Löten, insbesondere Hartlöten. In jedem Fall erfüllt der thermische Stoffschluss die geforderten Festigkeitsbedingungen auch bei den betriebsbedingten relativ hohen Temperaturen.

In einer Ausführung des erfindungsgemäßen Verfahrens werden Verfahrensschritt (S2) Auswählen eines Verbindungsprofils Chladnische Klangfiguren verwendet

In einer weiteren Ausführung des Verfahrens ist vorgesehen, dass im Verfahrensschritt (S3) Optimieren ein parametrisches oder/und unparametrisches Optimieren durchgeführt wird.

Dabei werden im Verfahrensschritt (S3) Optimieren als Parameter Formen des Verbindungsprofils, Positionen des Verbindungsprofils, Formen aufgetragener Profile, Positionen aufgetragener Profile, Materialeigenschaften (z.B. Elastizitätsmodule)), und/oder eine Abstützbreite und Position von Druckstempeln einer zuzuordnende Scheibenbremse verwendet.

Weitere vorteilhafte Ausbildungen sind in den Unteransprüchen gekennzeichnet.

Ausführungsbeispiele der Erfindung werden nachfolgend anhand der beigefügten Zeichnungen beschrieben.

Es zeigen:
- Figur 1: eine schematische Teilschnittansicht eines Ausführungsbeispiels einer erfindungsgemäßen Scheibenbremse mit erfindungsgemäßen Bremsbelägen;
- Figur 2: ein Ausführungsbeispiel eines erfindungsgemäßen Bremsbelags der Scheibenbremse nach Figur 1 in einer schematischen Seitenansicht;
- Figur 3: den Bremsbelag nach Figur 2 in einer schematischen Rückansicht;
- Figur 4-5: weitere Ausführungsbeispiele des erfindungsgemäßen Bremsbelags in schematischen Rückansichten; und
- Figur 6: ein Flussdiagramm eines Ausführungsbeispiels eines erfindungsgemäßen Verfahrens.

Koordinaten x, y, z in den Figuren dienen zur Erleichterung der Orientierung.

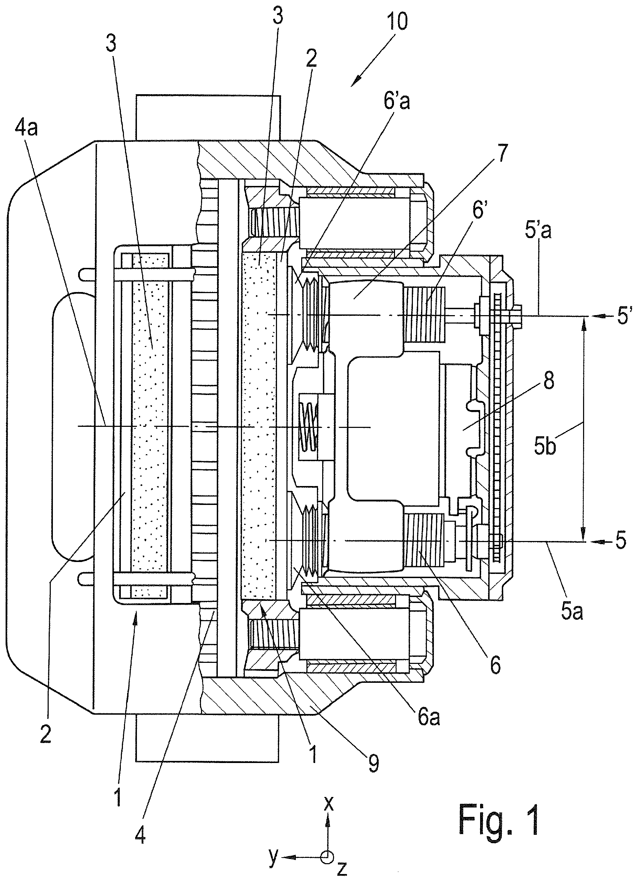

Fig. 1 zeigt eine schematische Teilschnittansicht eines Ausführungsbeispiels einer erfindungsgemäßen Scheibenbremse 10 mit erfindungsgemäßen Bremsbelägen 1.

Die Scheibenbremse 10 ist in diesem Ausführungsbeispiel für ein Nutzfahrzeug vorgesehen, aber nicht darauf beschränkt, und weist zwei Bremsbeläge 1 auf. Jeder Bremsbelag 1 umfasst eine Belagträgerplatte 2 mit einem Reibbelag 3. Beiderseits einer Bremsscheibe 4 ist hier jeweils ein Bremsbelag 1 angeordnet. Die Bremsscheibe 4 weist eine Bremsscheibendrehachse 4a auf, welche in y-Richtung verläuft. Die Bremsscheibe 4 liegt in einer x-z-Ebene und ist von einem, hier als Schwimmsattel ausgeführten, Bremssattel 9 übergriffen, in welchem die Bremsbeläge 1 gehalten sind. Der in der Figur 1 auf der linken Seite der Bremsscheibe 4 befindliche Bremsbelag 1 wird reaktionsseitiger Bremsbelag 1 und der auf der rechten Seite der Bremsscheibe 4 angeordnete Bremsbelag 1 wird zuspannseitiger Bremsbelag 1 genannt.

In diesem Ausführungsbeispiel ist die Scheibenbremse 10 als zweistempelige Bremse mit zwei Spindeleinheiten 5 und 5' mit jeweils einer Spindelachse 5a, 5'a ausgebildet. Die Spindelachsen 5a, 5'a verlaufen in y-Richtung parallel zu der Bremsscheibendrehachse 4a. Jede Spindeleinheit 5, 5' weist einen Gewindestempel 6, 6' auf, der als Hohlwelle mit einem Außengewinde ausgebildet ist. Ein Abstand zwischen den Spindelachsen 5a, 5'a in x-Richtung wird hier als Abstützbreite 5b bezeichnet.

Der zuspannseitige Bremsbelagträger 2 steht mit den Spindeleinheiten 5, 5' über Druckstücke 6a, 6'a, die an Enden der Gewindestempeln 6, 6' angeordnet sind, in Verbindung. Der andere, reaktionsseitige Bremsbelagträger 2 ist auf der anderen Seite der Bremsscheibe 4 im Bremssattel 9 festgelegt. Die Gewindestempel 6, 6' sind jeweils in einer Traverse 7, die auch als Brücke bezeichnet wird, mit ihren Außengewinden in Gewindebohrungen der Traverse 7 verdrehbar angeordnet. Das Gewinde ist hier mit einer Steigung im Bereich der Selbsthemmung ausgeführt. Durch die Drehbewegung der Gewindestempel 6, 6' in der Traverse 7, ausgelöst durch eine nicht weiter beschriebene Nachstellvorrichtung zur Nachstellung eines so genannten Lüftspiels, ändert sich die Axialposition der Gewindestempel 6, 6' relativ zu der Traverse 7. Mit dem Begriff Axialposition ist hier eine Position der Gewindestempel 6, 6' in Axialrichtung der Bremsscheibenachse 4a und der Achsen 5a, 5'a in x-Richtung gemeint. Die Achsen 5a, 5'a verlaufen hier parallel zu der Bremsscheibenachse 4a.

Unter dem Begriff Lüftspiel ist ein Abstand zwischen den Reibbelägen 3 und der Bremsscheibe 4 in der gelösten Stellung, welche in Fig. 1 dargestellt ist, zu verstehen. Infolge von Belag- und Scheibenverschleiß wird dieses Lüftspiel größer.

Die Traverse 7 und die Gewindestempel 6, 6' sind von einer Zuspannvorrichtung, hier ein Bremshebel 8, betätigbar. Der Bremshebel 8 weist einen nicht näher bezeichneten Hebelkörper auf, welcher mit der Traverse 7 in Zusammenwirkung steht.

Die Traverse 7 ist in y-Richtung in Richtung der Bremsscheibenachse 4a durch den Bremshebel 8 verstellbar. Eine Bewegung auf die Bremsscheibe 4 zu wird als Zuspannbewegung bezeichnet, und eine Bewegung in Gegenrichtung wird Lösebewegung genannt. Eine nicht näher bezeichnete Rückstellfeder ist in der Mitte der Traverse 7 in einer entsprechenden Ausnehmung auf der belagseitigen Seite der Traverse 7 aufgenommen und stützt sich am Bremssattel 9 ab. Mittels der Rückstellfeder wird die Traverse 7 bei der Lösebewegung in die in Figur 1 gezeigte gelöste Stellung der Scheibenbremse 10 verstellt.

Die Scheibenbremse 10 kann unterschiedliche Kraftantriebe aufweisen. Der Bremshebel 8 wird hier z.B. pneumatisch, z.B. von einem Pneumatikzylinder, betätigt. Zu Aufbau und Funktion einer pneumatischen Scheibenbremse 10 wird auf die entsprechende Beschreibung des Dokuments DE 197 29 024 C1 verwiesen.

Nach Beginn eines Bremsvorgangs werden die Reibbeläge 3 in der Zuspannbewegung an die Bremsscheibe 4 gedrückt. Dabei wird ein so genannter Reibepunkt nach Überbrückung des Lüftspiels erreicht. Somit ist beim zugespannten Reibbelag 3 das Lüftspiel zu Null geworden.

Unter dem Begriff "Reibepunkt" ist der Punkt zu verstehen, in welchem der Reibbelag 3 an der Bremsscheibe 4 beim Zuspannen der Bremse zur Anlage kommt bzw. beim Lösen der Bremse noch anliegt. Weiteres Zuspannen bewirkt dann durch Anpressen des/der Reibbelags/Reibbeläge 3 an die Bremsscheibe 4 eine Bremsung. Ein Lösen der Zuspannvorrichtung bewirkt eine Umkehrung des oben beschriebenen Vorgangs.

Bei einem Bremsvorgang können Schwingungen und Geräusche entstehen, welche in unterschiedliche Bereiche abhängig von der Frequenz und Schwingungstyp eingeteilt werden können (siehe z.B. Allgeier, R.: Experimentelle und numerische Untersuchungen zum Bremsenquietschen. VDI-Fortschritt-Berichte, Reihe 12, Nr. 481, Düsseldorf 2002). Die Schwingungstypen können erzwungen oder selbsterregt oder Kombinationen daraus sein. Im Weiteren sollen die Frequenzbereiche von ca. 1 kHz bis ca. 3kHz (niederfrequentes Quietschen) und von ca. 3 kHz bis ca. 20 kHz (hochfrequentes Quietschen) betrachtet werden. Diese Frequenzbereiche liegen im Bereich des menschlichen Gehörs, insbesondere können dabei die Frequenzen oberhalb von 3 kHz als unangenehm empfunden werden, da sie empfindliche Bereiche des Hörens betreffen.

Eine mögliche Ursache für das Entstehen dieser Schwingungen können beispielsweise dynamische Instabilitäten sein. Darunter ist eine Entstehung von Resonanzschwingungen in dem dynamischen System Scheibenbremse/Radbremse zu verstehen. Die Resonanzschwingungen können dann zu den Quietschgeräuschen führen. Es hat sich gezeigt, dass die Grundschwingung durch einen so genannten Stick-Slip-Effekt verursacht werden kann. Das heißt, durch physikalische Instabilität aufgrund der physikalischen Eigenschaften des Materials des Reibbelags 3 (Elastizität, Scherfestigkeit, Rauhigkeit) kann eine periodische Schwingung im Bremssystem verursacht werden. Ist ein Haftreibwert der Bremsscheibe 4 und des Reibbelags 3 größer als der Gleitreibwert, kann eine so genannte Stick-Slip-Schwingung erzeugt werden [siehe auch: Bert Breuer/Karlheinz H. Bill (Hrsg.), Bremsenhandbuch Vieweg Verlag, Wiesbaden 32006].

Ab dem Anlegen des Reibbelags 3 an die Bremsscheibe 4 können Schwingungen auftreten. Bei dem Bremsvorgang findet im Reibepunkt zunächst eine Berührung der Oberflächen von Reibbelag 3 und Bremsscheibe 4 an verschiedenen, hervorstehenden Punkten/Linien/Kurven/Mustern statt, die sich dann bei erhöhter Zuspannkraft zu einer Fläche ausweiten. Die Bremsscheibe 4 dreht sich um die Bremsscheibendrehachse 4 (y-Richtung), wobei Tangentialkräfte (z.B. in x-Richtung in Fig. 1) auftreten, die über die Belagträgerplatte 2 über ihre Kanten bzw. Anlageflächen in den Bremssattel 9 eingeleitet werden. Außerdem wird der zuspannseitige Reibbelag 3 von den Druckstücken 6a, 6'a der Gewindestempel 6, 6' mit der Zuspannkraft in zwei Krafteinleitungsbereichen beaufschlagt, die mit ihren Wirkungslinien in der Abstützbreite 5b angeordnet sind.

Die dabei in der Reibpaarung entstehenden Schwingungen werden einerseits auf die Bremsscheibe 4 und andererseits auf die Reibbeläge 3 mit ihren Belagträgerplatten 2 übertragen. Im Fall der Bremsscheibe 4 können die Schwingungen durch die Fläche der Bremsscheibe 4 an die umgebende Luft abgegeben und auf die Radlagerung weitergeleitet werden. Die Schwingungsamplituden können klein gegenüber der Dicke (in y-Richtung) der Belagträgerplatte 2 bzw. des Reibbelags 3 sein.

Es kann in ungünstigen Fällen dazu kommen, dass sich der Reibbelag 3 aufgrund der Schwingungen in einer x-z-Ebene in y-Richtung in einer bestimmten Größenordnung wellenförmig mit Bergen und Tälern, die sich in y-Richtung erstrecken, elastisch dergestalt verformt, dass nur noch die Berge dieser wellenförmigen Verformung mit der Bremsscheibe 4 in Kontakt sind. Dies gilt es zu verhindern.

Die Reibbeläge 3 mit den Belagträgerplatten 2 übertragen die Schwingungen auf den Sattel 9, die Gewindestempel 6, 6' und den Bremsträger durch mechanische Kontaktkoppelung. So kann z.B. auch die Satteloberfläche die Schwingungen an die Umgebungsluft übertragen.

Kongruente Eigenfrequenzen (Moden) der an der Schwingungserzeugung und Schwingungsweiterleitung bzw. Schwingungsübertragung beteiligten Bauteile der Bremse (z.B. Reibbeläge 3 mit ihren Belagträgerplatten 2, Bremsscheibe 4) können zu einer Vergrößerung der Schwingungen im Resonanzfall beitragen. Dabei kann sich eine Kopplung der Moden ergeben, wie beispielsweise der Eigenmoden von Bremsscheibe 4 und Reibbelägen 3, was zu einer instabilen Mode führen kann. Unter der Eigenfrequenz eines Bauteils ist hier nicht nur die Grundschwingfrequenz, welche als 1. Eigenfrequenz bezeichnet wird, gemeint, sondern auch weitere Vielfache davon.

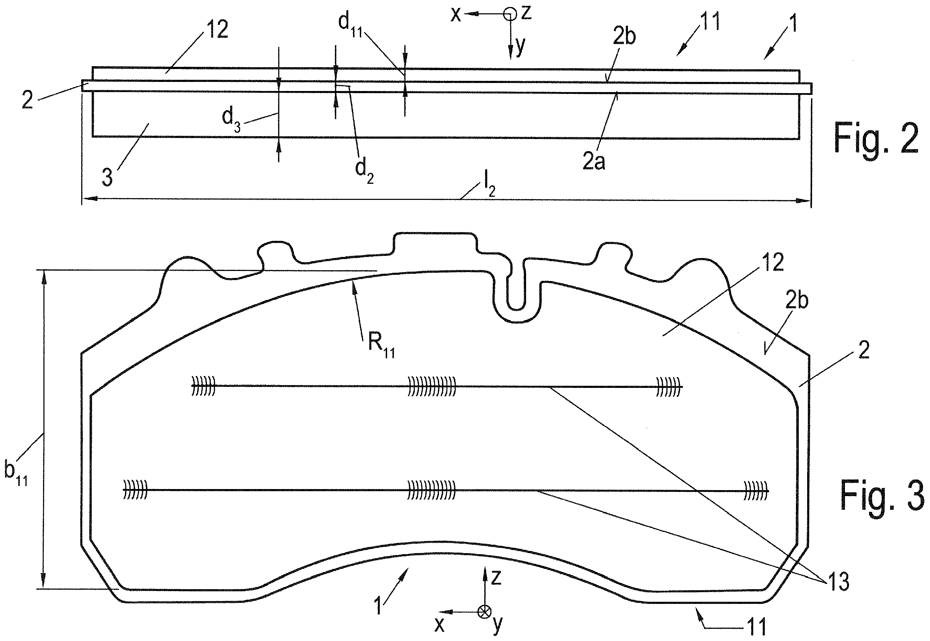

Figur 2 zeigt ein Ausführungsbeispiel des erfindungsgemäßen Bremsbelags 1 der Scheibenbremse 10 nach Figur 1 in einer schematischen Seitenansicht.

Der Bremsbelag 1 ist mit einer Dämpfungseinrichtung 11 versehen, welche die Eigenfrequenzen des Bremsbelags 1 im Resonanzfall dämpfen kann. Die Dämpfungseinrichtung 11 kann aber auch so ausgelegt sein, dass die Eigenfrequenzen des Bremsbelags 1 durch sie verändert werden, d.h. zu anderen Frequenzen hin verschoben werden. Auf diese Weise können auch die Moden-Kopplungen verringert bzw. sogar vermieden werden.

Der Bremsbelag 1 umfasst somit die Belagträgerplatte 2, den Reibbelag 3 und die Dämpfungseinrichtung 11.

Die Belagträgerplatte 2 des Bremsbelags 1 weist eine Belagseite 2a, auf welcher der Reibbelag 3 angebracht ist, und eine der Belagseite 2a gegenüberliegende Rückseite 2b auf.

Die Dämpfungseinrichtung 11 umfasst hier ein Dämpfungselement 12 und ein Verbindungsprofil. Das Dämpfungselement 12 ist auf der Rückseite 2b der Belagträgerplatte 2 mit dem Verbindungsprofil fest aufgebracht. Dieses Verbindungsprofil wird unten noch näher erläutert. Das Dämpfungselement 12 ist hier eine Metallplatte, z.B. aus Stahlblech.

Die Belagträgerplatte 2 weist eine Dicke d₂ in y-Richtung und eine Länge l₂ in x-Richtung auf. Eine Länge des Reibbelags 3 ist hier etwas geringer, kann aber auch der Länge l₂ der Belagträgerplatte 2 entsprechen. Eine Dicke d₃ ist dem Reibbelag 3 in y-Richtung zugeordnet, und eine Dicke d₁₁ in y-Richtung gehört zu der Dämpfungseinrichtung 11.

Figur 3 stellt den Bremsbelag 1 nach Figur 2 in einer schematischen Rückansicht dar.

Das Dämpfungselement 12 steht in montierter Stellung des Bremsbelages 1 mit der Zuspanneinrichtung der Scheibenbremse 10 in Kontakt, d.h., das Dämpfungselement 12 steht in Kontakt mit den Druckstücken 6a, 6'a der Gewindestempel 6, 6' und muss daher von seiner Festigkeit (selbstverständlich mit einem Sicherheitsfaktor) her so ausgelegt sein, dass die Zuspannkräfte auf den Bremsbelag 3 übertragen werden können, ohne dass das Dämpfungselement 12 bzw. die Dämpfungseinrichtung 11 verändert bzw. beschädigt wird.

Eine Länge des Dämpfungselementes 11 in x-Richtung ist etwas geringer oder gleich der Länge l₂ der Belagträgerplatte 2. Die Form des Dämpfungselementes 11 ist hier der Kontur der Belagträgerplatte 2 angepasst und weist an der Oberseite einen Radius R₁₁ auf, dessen Mittelpunkt z.B. in der Bremsscheibendrehachse 4a liegen kann. Eine Breite b₁₁ des Dämpfungselementes 12 erstreckt sich in z-Richtung.

Unter dem Begriff "Verbindungsprofil" ist sowohl die Form als auch die Position einer Verbindung oder mehrerer Verbindungen zu verstehen. Das Verbindungsprofil zwischen dem Dämpfungselement 12 und der Belagträgerplatte 2 ist in dem gezeigten Beispiel durch einen thermischen Stoffschluss durch Schweißen hergestellt. Hier sind zwei Verbindungsnähte 13 als Schweißnähte gezeigt, die zwischen dem Dämpfungselement 12 und der Rückseite 2b der Belagträgerplatte 2 angeordnet sind. Somit besteht das Verbindungsprofil hier aus zwei Verbindungsnähten 13, die in x-Richtung, d.h. in tangentialer Richtung zu der Bremsscheibe 4, jeweils einer bestimmten Länge und in z-Richtung, d.h. radial zu der Bremsscheibe 4, in einem bestimmten Abstand zueinander parallel angeordnet sind, wobei ihre Anfangs- und Endpunkte auf einen (nicht gezeigten) Referenzpunkt (z.B. ein Mittelpunkt eines Radius R₁₁, die Bremsscheibendrehachse 4a oder ein Eckpunkt der Belagträgerplatte 2) festgelegt sind. Die Breite einer jeden Verbindungsnaht 13 erstreckt sich in z-Richtung. Zur besseren Ansicht ist hier das Dämpfungselement 12 durchsichtig und nur mit seiner Randkontur dargestellt.

Die beiden Verbindungsnähte 13 erstrecken sich parallel zu der Länge l₂ der Belagträgerplatte 2 in x-Richtung. Die Schweißungen können, wie dargestellt, unter Bildung einer durchgehenden Verbindungsnaht 13 erfolgen. Dabei ist in dem gezeigten Beispiel eine Länge der oberen Verbindungsnaht 13 kürzer als eine Länge der unteren Verbindungsnaht 13. Denkbar ist aber auch, zur Beeinflussung des Dämpfungsverhaltens des Dämpfungselementes 12 die Verbindungsnähte 13 partiell (hier sind z.B. drei Schweißraupen angedeutet) an den vorbestimmten Stellen anzubringen. Dies wird unten noch ausführlich erläutert.

Eine Anpassung der Eigenfrequenzen und der modalen Dämpfung des Bremsbelags 1 kann es ermöglichen, Mode-Kopplungen (bzw. Bremsenquietschen) zu vermeiden bzw. erheblich zu reduzieren. Hierbei kann eine Optimierung der Dämpfungseinrichtung 11 durch ein spezielles Verbindungsprofils zwischen der Belagträgerplatte 2 und dem Dämpfungselement 12 beitragen, die Eigenfrequenz und die modale Dämpfung des Bremsbelags 1 beliebig zu kontrollieren und zu manipulieren.

Durch eine solche Optimierung des Verbindungsprofils zwischen der Belagträgerplatte 2 und dem Dämpfungselement 12 können neue Eigenfrequenzen geschaffen werden, durch welche z.B. eine existierende Kopplung von Moden gestört bzw. reduziert oder aufgehoben wird. Daraus resultiert, dass die Schwingungen, die ein Quietschen verursachen, in einen anderen Frequenzbereich verschoben werden, der außerhalb des hörbaren Frequenzbereichs liegt. Zudem ist es möglich, dass die Schwingungsamplituden verringert werden.

Beispielsweise kann eine unsymmetrische Verbindung mit einem geeigneten unsymmetrischen Profil bzw. Aufbau unsymmetrische Moden schaffen und die symmetrischen Moden in entsprechender Weise wie oben beschrieben beeinflussen.

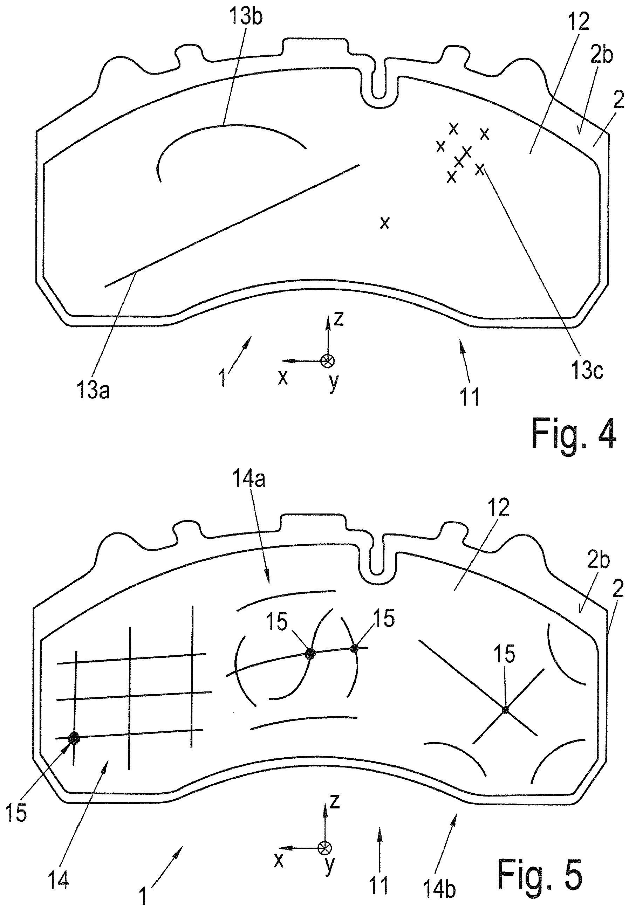

Hierzu zeigen Figur 4 und 5 weitere Ausführungsbeispiele des erfindungsgemäßen Bremsbelags 1 in schematischen Rückansichten.

In Figur 4 sind Variationen des thermischen Stoffschlusses mit Schweißverbindungen dargestellt. So ist eine Verbindungsraupe 13a als eine durchgehende Gerade in einem Winkel zu der x-Richtung bzw. y-Richtung ausgerichtet und befindet sich in unsymmetrischer Weise in den beiden linken Dritteln des Dämpfungselementes 12. Ein Verbindungsprofil mit diesen Verbindungsnähten 13a könnte z.B. so gestaltet sein, dass diese "schrägen" Verbindungsnähte 13a über den gesamten Bereich zwischen dem Dämpfungselement 12 und der Belagträgerplatte 2 verteilt angeordnet sind. Dabei können die "schrägen" Verbindungsnähte 13a parallel zueinander oder auch in unterschiedlichen Winkel einzeln oder in Gruppen verteilt sein.

Eine weitere Verbindungsnaht 13b steht stellvertretend für eine Ausführung des Verbindungsprofils in Kurvenform.

Zudem sind Verbindungspunkte 13c gezeigt, die auf der gesamten Fläche, nach einem bestimmten Anordnungsmuster (regelmäßiger oder zufälliger Art) verteilt, Verbindungen zwischen der Belagträgerplatte 2 und dem Dämpfungselement 12 bilden. Diese Verbindungspunkte 13c können beispielsweise durch Punktschweißen erzeugt werden.

Figur 5 stellt Verbindungsprofile in bestimmten Musteranordnungen dar.

Ein Muster 14 ist durch rechtwinklig zueinander angeordnete Geraden gebildet, welche jeweils parallel zu der x- bzw. y-Richtung verlaufen. Diese Geraden schneiden sich in Schnittpunkten 15. Die Geraden können z.B. Schweißraupen sein, welche durch Auftragsschweißen auf die Rückseite der Belagträgerplatte 2 aufgebracht sind, wobei die Knoten 15 Verbindungen zu dem Dämpfungselement 12 bilden. Natürlich können auch die Geraden als Schweißraupen des Musters 14 Verbindungen vollständig oder auch nur teilweise, z.B. in unsymmetrischer Weise, bilden. Selbstverständlich können die Geraden auch in einem Winkel angeordnet sein, z.B. unter Bildung von Mustern 14 in Rhombenform, Trapezform usw.

Somit umfasst die Dämpfungseinrichtung 11 das Verbindungsprofil mit Verbindungen zwischen der Belagträgerplatte 2 und dem Dämpfungselement 12, das Dämpfungselement 12 und auch Verbindungsnähte 13, 13a, 13c, Muster 14, 14a, 14b und Knoten 15, welche keine Verbindungen bilden.

Ein weiteres Muster 14a zeigt eine Kombination von bogen- bzw. kurvenförmigen Verläufen, die von einander beabstandet sind. Sie können auch Knoten 15 bilden.

Noch ein weiteres Muster 14b ist in Art einer chladnischen Klangfigur gestaltet. Chladnische Klangfiguren bilden für bestimmte (Ton-) Frequenzen zugehörige, spezielle Muster von Bögen, Kurven, Geraden. Dabei sind diese Klangfiguren von der jeweiligen Geometrie des zugehörigen Gegenstands, z.B. ein Klangkörper, abhängig. Auch bei der Belagträgerplatte 2 mit der Dämpfungseinrichtung 11 können solche Klangfiguren als Grundlage zur Erzeugung eines bestimmten Verbindungs- bzw. Beeinflussungsprofils dienen.

Anstelle von Schweißverbindungen oder in Kombination mit diesen können auch Löt- bzw. Hartlötverbindungen zur Anwendung kommen.

Die Dämpfungseinrichtung 11 mit den oben beschriebenen Verbindungsprofilen zwischen Belagträgerplatte 2 und Dämpfungselement 12 wird mittels eines erfindungsgemäßen Verfahrens optimiert.

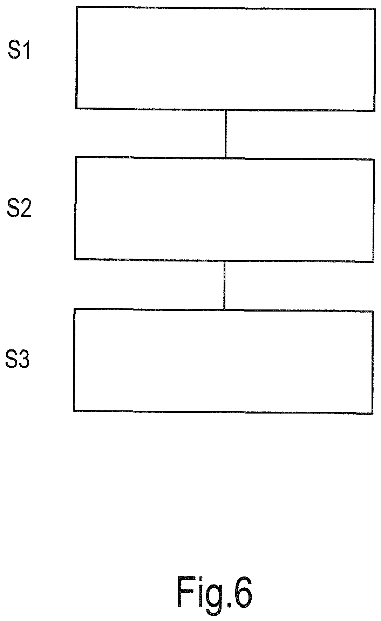

Dazu ist in Figur 6 ein Flussdiagramm eines Ausführungsbeispiels dieses erfindungsgemäßen Verfahrens zum Optimieren der Dämpfungseinrichtung 11 gezeigt.

In einem ersten Verfahrensschritt S1 wird ein Bremsbelag 1 mit einer Belagträgerplatte 2 mit bereits ermittelten Eigenfrequenzen und bekannten Materialparametern bereitgestellt.

In einem zweiten Verfahrensschritt S2 wird ein Verbindungsprofil aus einer Gruppe von Verbindungsnähten 13, 13a, 13b, Verbindungspunkten 13c, Mustern 14, 14a, 14b und Knoten 15 ausgewählt. Dabei kann auch eine Verwendung Chladnischer Klangfiguren erfolgen. Dann wird eine Modalanalyse von Bremsbelag 1 mit der so ausgewählten Dämpfungseinrichtung 11 zur Ermittlung der sich neu ergebenden Eigenfrequenzen und modalen Dämpfungen der zuvor vorhandenen Eigenfrequenzen durchgeführt.

Die folgende Tabellen 1 und 2 zeigen ermittelte Frequenzen im Zusammenhang mit Moden bei zwei verschiedenen Verbindungsprofilen.

**Tabelle 1:**

| Verbindungsprofil 1 | |
|---|---|
| Mode | Frequenz [Hz] |
| 1 | 1378,5 |
| 2 | 2085,9 |
| 3 | 4242,0 |
| 4 | 4755,4 |
| 5 | 5108,3 |
| 6 | 6852,2 |
| 7 | 6915,5 |
| 8 | 8211,5 |

**Tabelle 2:**

| Verbindungsprofil 2 | |
|---|---|
| Mode | Frequenz [Hz] |
| 1 | 1253,3 |
| 2 | 1900,8 |
| 3 | 3629,0 |
| 4 | 3939,1 |
| 5 | 4575,0 |
| 6 | 4856,5 |
| 7 | 6238,8 |
| 8 | 6281,9 |
| 9 | 7951,0 |
| 10 | 8110,8 |
| 11 | 8284,4 |

Die Tabelle 1 und 2 zeigen in gleichen Moden unterschiedliche Frequenzen. Das bedeutet, dass durch unterschiedliche Verbindungsprofile die Eigenfrequenzen und modalen Dämpfungen beeinflusst werden. So sind die Moden des Verbindungsprofils 1 durch das Verbindungsprofil 2 zu niedrigeren Frequenzen hin verschoben.

Anhand des so ermittelten Ergebnisses wird in einem dritten Verfahrensschritt eine Optimierung des Verbindungsprofils bzw. der Dämpfungseinrichtung 11 vorgenommen. Diese Optimierung wird mittels eines Finite-Elemente- (FE-) Modells durchgeführt. Eine solche Optimierung kann parametrisch oder/und unparametrisch erfolgen.

Bei der Optimierung werden folgende Parameter benutzt:
- Form des Verbindungsprofils
- Position des Verbindungsprofils
- Form aufgetragener Profile
- Position aufgetragener Profile
- Materialeigenschaften (z.B. Elastizitätsmodul(e))
- Abstützbreite 5b und Position der Druckstempel 6, 6b (bei nur einem Druckstempel 6, 6b dessen Position)

Die Verfahrensschritte S1 bis S3 werden bevorzugt in einem Simulationsprozess auf einem Rechner durchgeführt.

Nach der Optimierung folgt eine experimentelle Prüfung.

Auf diese Weise wird ein Bremsbelag 1 mit einer optimierten Dämpfungseinrichtung 11 bereitgestellt, bei besonders ein Bremsenquietschen verringert bzw. vollständig ausgeschlossen ist.

Die Erfindung ist nicht auf die beschriebenen Ausführungsbeispiele eingeschränkt, sondern kann im Rahmen der Ansprüche modifiziert werden.

So ist es denkbar, dass die Verbindungsnähte 13a, 13b und Verbindungspunkte 13c wie auch die Muster 14, 14a, 14b und Knoten 15 durch Auftragsschweißen auf der Rückseite 2b der Belagträgerplatte 2 oder/und der dieser Rückseite 2b gegenüberliegenden Seite des Dämpfungselementes 12 hergestellt sind, ohne dass diese dann alle eine Verbindung zwischen der Belagträgerplatte 2 und dem Dämpfungselement 12 bilden. Dabei wird eine Verbindung z.B. nur durch bestimmte Verbindungsprofile hergestellt.

Die Dämpfungseinrichtung 11 kann auch weiterhin Ausnehmungen und Durchbrüchen umfassen, wobei z.B. das Dämpfungselement 12 durchgehende Nuten, Öffnungen, Einfräsungen u.dgl. aufweisen kann. Diese Gestaltungen können ebenfalls die Formen der Verbindungsnähte 13, 13a, 13b bzw. der Muster 14, 14a, 14b aufweisen.

### Bezugszeichenliste

- 1: Bremsbelag
- 2: Belagträgerplatte
- 2a: Belagseite
- 2b: Rückseite
- 3: Reibbelag
- 4: Bremsscheibe
- 4a: Bremsscheibendrehachse
- 5, 5': Spindeleinheit
- 5a, 5'a: Spindelachse
- 5b: Abstützbreite
- 6, 6': Druckstempel
- 6a, 6'a: Druckstück
- 7: Traverse
- 8: Bremsdrehhebel
- 9: Bremssattel
- 10: Scheibenbremse
- 11: Dämpfungseinrichtung
- 12: Dämpfungselement
- 13, 13a, 13b: Verbindungsnaht
- 13c: Verbindungspunkt
- 14, 14a, 14b: Muster
- 15: Knoten
- b₁₁: Breite
- d₂, d₃, d₁₁: Dicke
- l₂: Länge
- R₁₁: Radius
- S1-3: Verfahrensschritte
- x, y, z: Koordinaten

## Patentansprüche

1. Bremsbelag (1) mit einer Dämpfungseinrichtung (11) für eine Scheibenbremse (10) für ein Kraftfahrzeug, insbesondere für ein Nutzfahrzeug, mit einer Belagträgerplatte (2), die einen Reibbelag (3) trägt, wobei die Dämpfungseinrichtung (11) mindestens ein mit der Belagträgerplatte (2) verbundenes Dämpfungselement (12) aufweist, wobei die Dämpfungseinrichtung (11) ein Verbindungsprofil umfasst, welches das mindestens eine Dämpfungselement (12) durch thermischen Stoffschluss mit der Belagträgerplatte (2) verbindet
**dadurch gekennzeichnet, dass**
das Verbindungsprofil mindestens eine Verbindungsnaht (13, 13a, 13b) umfasst.

2. Bremsbelag (1) nach Anspruch 1, **dadurch gekennzeichnet, dass** das Verbindungsprofil mindestens einen Verbindungspunkt (13c) umfasst.

3. Bremsbelag (1) nach einem der vorhergehenden Ansprüche, **dadurch gekennzeichnet, dass** das Verbindungsprofil Muster (14, 14a) mit Knoten (15) aufweist.

4. Bremsbelag (1) nach einem der vorhergehenden Ansprüche, **dadurch gekennzeichnet, dass** das Verbindungsprofil Muster (14, 14a) ohne Knoten (15) aufweist.

5. Bremsbelag (1) nach Anspruch 3 oder 4, **dadurch gekennzeichnet, dass** das Verbindungsprofil mindestens ein Muster (14b) in Art chladnischer Klangfiguren aufweist.

6. Bremsbelag (1) nach einem der vorhergehenden Ansprüche, **dadurch gekennzeichnet, dass** das Verbindungsprofil sowohl Verbindungen als auch auf die Belagträgerplatte (2) oder/und auf das mindestens eine Dämpfungselement (12) aufgetragene Anordnungen umfasst.

7. Bremsbelag (1) nach einem der vorhergehenden Ansprüche, **dadurch gekennzeichnet, dass** das Verbindungsprofil unsymmetrische Anordnungen umfasst.

8. Bremsbelag (1) nach einem der vorhergehenden Ansprüche, **dadurch gekennzeichnet, dass** das Verbindungsprofil symmetrische Anordnungen umfasst.

9. Bremsbelag (1) nach einem der vorhergehenden Ansprüche, **dadurch gekennzeichnet, dass** der thermische Stoffschluss des Verbindungsprofils eine Schweißverbindung ist.

10. Bremsbelag (1) nach einem der Ansprüche 1 bis 8, **dadurch gekennzeichnet, dass** der thermische Stoffschluss des Verbindungsprofils durch Löten, vorzugsweise Hartlöten, hergestellt ist.

11. Bremsbelag (1) nach einem der vorhergehenden Ansprüche, **dadurch gekennzeichnet, dass** das Dämpfungselement (12) die Belagträgerplatte (2) seitlich übergreifende Anschlagelemente aufweist.

12. Scheibenbremse (10) für ein Kraftfahrzeug, insbesondere für ein Nutzfahrzeug, mit einem eine Bremsscheibe (4) übergreifenden Bremssattel (9), einer Zuspannvorrichtung, mindestens einer Spindeleinheit (5, 5') mit einem Gewinderohr (6, 6'), wobei beidseitig der Bremsscheibe (4) jeweils mindestens ein Bremsbelag (1) mit einer Belagträgerplatte (2) angeordnet ist, **dadurch gekennzeichnet, dass** der jeweils mindestens eine Bremsbelag (1) nach einem der vorhergehenden Ansprüche ausgebildet ist.

13. Verfahren zum Optimieren einer Dämpfungseinrichtung (11) eines Bremsbelags (1) nach einem der Ansprüche 1 bis 11, **gekennzeichnet durch** die Verfahrensschritte
(S1) Bereitstellen eines Bremsbelags (1) mit einer Bremsträgerplatte (2) mit ermittelten Eigenfrequenzen und Materialparametern;
(S2) Auswählen eines Verbindungsprofils der Dämpfungseinrichtung (11) aus einer Gruppe von Verbindungsnähten (13, 13a, 13b), Verbindungspunkten (13c), Mustern (14, 14a, 14b) und Knoten (15) und Ermitteln von sich neu ergebenden Eigenfrequenzen und modalen Dämpfungen mittels einer Modalanalyse des Bremsbelags (1); und
(S3) Optimieren der Dämpfungseinrichtung (11) des Bremsbelags (1) mittels eines Finite-Elemente- (FE-) Modells.

14. Verfahren nach Anspruch 13, **dadurch gekennzeichnet, dass** im Verfahrensschritt (S2) Auswählen eines Verbindungsprofils Chladnische Klangfiguren verwendet werden.

15. Verfahren nach Anspruch 13 oder 14, **dadurch gekennzeichnet, dass** im Verfahrensschritt (S3) Optimieren ein parametrisches oder/und unparametrisches Optimieren durchgeführt wird.

16. Verfahren nach Anspruch 15, **dadurch gekennzeichnet, dass** im Verfahrensschritt (S3) Optimieren als Parameter Formen des Verbindungsprofils, Positionen des Verbindungsprofils, Formen aufgetragener Profile, Positionen aufgetragener Profile, Materialeigenschaften (z.B. Elastizitätsmodul(e)), und/oder eine Abstützbreite (5b) und Position von Druckstempeln (6, 6b) einer zuzuordnende Scheibenbremse (10) verwendet werden.

## Claims

1. Brake pad (1) having a damping device (11) for a disk brake (10) for a motor vehicle, in particular for a utility vehicle, having a pad carrier plate (2) which bears a friction pad (3), wherein the damping device (11) has at least one damping element (12) connected to the pad carrier plate (2), wherein the damping device (11) comprises a connecting profile which connects the at least one damping element (12) to the pad carrier plate (2) by thermal cohesion, **characterized in that** the connecting profile comprises at least one connecting seam (13, 13a, 13b).

2. Brake pad (1) according to Claim 1, **characterized in that** the connecting profile comprises at least one connecting point (13c).

3. Brake pad (1) according to one of the preceding claims, **characterized in that** the connecting profile has patterns (14, 14a) with nodes (15).

4. Brake pad (1) according to one of the preceding claims, **characterized in that** the connecting profile has patterns (14, 14a) without nodes (15).

5. Brake pad (1) according to Claim 3 or 4, **characterized in that** the connecting profile has at least one pattern (14b) in the manner of Chladni sound figures.

6. Brake pad (1) according to one of the preceding claims, **characterized in that** the connecting profile comprises both connections and also arrangements applied to the pad carrier plate (2) and/or to the at least one damping element (12) .

7. Brake pad (1) according to one of the preceding claims, **characterized in that** the connecting profile comprises asymmetrical arrangements.

8. Brake pad (1) according to one of the preceding claims, **characterized in that** the connecting profile comprises symmetrical arrangements.

9. Brake pad (1) according to one of the preceding claims, **characterized in that** the thermal cohesion of the connecting profile is a welded connection.

10. Brake pad (1) according to one of Claims 1 to 8, **characterized in that** the thermal cohesion of the connecting profile is produced by soldering, preferably brazing.

11. Brake pad (1) according to one of the preceding claims, **characterized in that** the damping element (12) has abutment elements which engage laterally over the pad carrier plate (2).

12. Disk brake (10) for a motor vehicle, in particular for a utility vehicle, having a brake caliper (9) which engages over a brake disk (4), having a brake-application device, having at least one spindle unit (5, 5') with a threaded tube (6, 6'), with in each case at least one brake pad (1) with a pad carrier plate (2) being arranged on both sides of the brake disk (4), **characterized in that** the in each case at least one brake pad (1) is designed in accordance with one of the preceding claims.

13. Method for optimizing a damping device (11) of a brake pad (1) according to one of Claims 1 to 11, **characterized by** the method steps:
(S1) providing a brake pad (1) with a brake carrier plate (2) with determined natural frequencies and material parameters;
(S2) selecting a connecting profile of the damping device (11) from a group of connecting seams (13, 13a, 13b), connecting points (13c), patterns (14, 14a, 14b) and nodes (15) and determining newly resultant natural frequencies and modal damping actions by means of a modal analysis of the brake pad (1); and
(S3) optimizing the damping device (11) of the brake pad (1) by means of a finite element (FE) model.

14. Method according to Claim 13, **characterized in that**, in method step (S2), selecting a connecting profile, Chladni sound figures are used.

15. Method according to Claim 13 or 14, **characterized in that**, in method step (S3), optimizing, parametric and/or non-parametric optimization is performed.

16. Method according to Claim 15, **characterized in that**, in method step (S3), optimizing, forms of the connecting profile, positions of the connecting profile, forms of applied profiles, positions of applied profiles, material characteristics (for example modulus/moduli of elasticity) and/or a support width (5b) and positions of pressure plungers (6, 6b) of an associated disk brake (10) are used as parameters.

## Revendications

1. Garniture (1) de frein ayant un dispositif (11) d'amortissement d'un frein (10) à disque d'un véhicule automobile, notamment d'un véhicule utilitaire, comprenant une plaque (2) de support de garniture, qui porte une garniture (3) de friction, le dispositif (11) d'amortissement ayant au moins un élément (12) d'amortissement relié à la plaque (2) de support de garniture, le dispositif (11) d'amortissement comprenant un profil de liaison, qui relie le au moins un élément (12) d'amortissement à la plaque (2) de support de garniture par complémentarité thermique de matière,
**caractérisée en ce que**
le profil de liaison comprend au moins un joint (13, 13a, 13b) de liaison.

2. Garniture (1) de frein suivant la revendication 1, **caractérisée en ce que** le profil de liaison comprend au moins un point (13c) de liaison.

3. Garniture (1) de frein suivant l'une des revendications précédentes, **caractérisée en ce que** le profil de liaison a un motif (14, 14a) à noeud (15).

4. Garniture (1) de frein suivant l'une des revendications précédentes, **caractérisée en ce que** le profil de liaison a un motif (14, 14a) sans noeud (15).

5. Garniture (1) de frein suivant la revendication 3 ou 4, **caractérisée en ce que** le profil de liaison a au moins un motif (14b) à la manière de figures de chladni.

6. Garniture (1) de frein suivant l'une des revendications précédentes, **caractérisée en ce que** le profil de liaison comprend à la fois des liaisons et des agencements déposés sur la plaque (2) de support de garniture ou/et sur le au moins un élément (12) d'amortissement.

7. Garniture (1) de frein suivant l'une des revendications précédentes, **caractérisée en ce que** le profil de liaison comprend des agencements dissymétriques.

8. Garniture (1) de frein suivant l'une des revendications précédentes, **caractérisée en ce que** le profil de liaison comprend des agencements symétriques.

9. Garniture (1) de frein suivant l'une des revendications précédentes, **caractérisée en ce que** la complémentarité thermique de matière du profil de liaison est une liaison soudée.

10. Garniture (1) de frein suivant l'une des revendications 1 à 8, **caractérisée en ce que** la complémentarité thermique de matière du profil de liaison est produite par brasage, de préférence par brasage dur.

11. Garniture (1) de frein suivant l'une des revendications précédentes, **caractérisée en ce que** l'élément (12) d'amortissement a des éléments de butée enjambant latéralement la plaque (2) de support de garniture.

12. Frein (10) à disque d'un véhicule automobile, notamment d'un véhicule utilitaire, comprenant un étrier (9) de frein enjambant un disque (4) de frein, un dispositif de serrage, au moins une unité (5, 5') de broche ayant un tube (6, 6') fileté, dans lequel il est disposé, des deux côtés du disque (4) de frein, respectivement au moins une garniture (1) de frein ayant une plaque (2) de support de garniture, **caractérisé en ce que** respectivement au moins une garniture (1) de frein est constituée suivant l'une des revendications précédentes.

13. Procédé pour optimiser un dispositif (11) d'amortissement d'une garniture (1) de frein suivant l'une des revendications 1 à 11, **caractérisé par** les stades :
(S1) on se procure une garniture (1) de frein ayant une plaque (2) de support de frein à fréquences propres et à paramètres de matériau déterminés ;
(S2) on choisit un profil de liaison du dispositif (11) d'amortissement dans le groupe des joints (13, 13a, 13b) de liaison, points (13c) de liaison, motifs (14, 14a, 14b) et noeuds (15) et on détermine des fréquences propres et des amortissements modaux produits nouvellement au moyen d'une analyse de mode de la garniture (1) de frein et
(S3) on optimise le dispositif (11) d'amortissement de la garniture (1) de frein au moyen d'un modèle aux éléments finis (FE).

14. Procédé suivant la revendication 13, **caractérisé en ce que**, dans le stade (S2) du procédé de choix d'un profil de liaison, on utilise des figures de chladni.

15. Procédé suivant la revendication 13 ou 14, **caractérisé en ce que**, dans le stade (S3) du procédé d'optimisation, on effectue une optimisation paramétrée ou/et non-paramétrée.

16. Procédé suivant la revendication 15, **caractérisé en ce que**, dans le stade (S3) du procédé d'optimisation, on utilise, comme paramètres, des formes du profil de liaison, des positions du profil de liaison, des formes de profilé déposé, des positions de profilé déposé, des propriétés de matériau (par exemple, module d'élasticité) et/ou largeur (5b) d'appui et position d'estampille (6, 6b) d'un frein (10) à disque associé.
